# EUROPÄISCHE PATENTSCHRIFT

(11) **EP 2 111 561 B1**
(45) Veröffentlichungstag und Bekanntmachung des Hinweises auf die Patenterteilung: **14.06.2017**
(21) Anmeldenummer: 08706751.8
(22) Anmeldetag: 15.01.2008
(51) Int. Cl.: G02B 25/02, G02B 27/02, G02B 25/00

(54) **STANDLUPE**
STAND MAGNIFIER
LOUPE À POSER

(30) Priorität: 17.01.2007 DE 102007003303
(43) Veröffentlichungstag der Anmeldung: 28.10.2009
(73) Patentinhaber: A. Schweizer GmbH Optische Fabrik, 91301 Forchheim (DE)
(72) Erfinder: SCHÜTTINGER, Alfred, 91336 Heroldsbach (DE)
(74) Vertreter: Kohl, Fabian Hanno
(86) Internationale Anmeldenummer: PCT/DE2008/000054
(87) Internationale Veröffentlichungsnummer: WO 2008/086780

(56) Entgegenhaltungen:
- EP-A- 0 603 703
- DE-A1- 2 348 567
- DE-A1- 10 020 715
- DE-U1- 9 302 485
- DE-U1- 9 412 153
- DE-U1- 20 023 758
- JP-U- H0 659 816

## Beschreibung

Die Erfindung betrifft eine Standlupe mit den Merkmalen des Anspruchs 1. Das Lupenelement mit dem daran angeordneten Griff kann als gesondert verwendbare Handlupe dienen.

Aus dem Stand der Technik sind mit einem Lupentopf versehene Handlupen bekannt, vgl. hierzu DE 201 22 490 U1.

Die DE 200 23 758 U1 lehrt ein vergrößerndes optisches System, das mit einer Energiequelle verbunden ist, wobei das Beleuchtungselement als Hochleistungs-LED ausgebildet ist. Weiter ist aus der oben genannten Druckschrift entnehmbar, daß das freie Griffende der Handlupe sich über eine Stütze auf der Aufstellfläche abstützt. Druckschrift DE 100 20 715 A1 offenbart eine dermatologische Handlupe mit austauschbaren Abstandaufsätzen. Der Erfindung liegt die Aufgabe zugrunde, eine Standlupe mit den Merkmalen des Oberbegriffes des Anspruches 1 derart weiterzubilden, daß diese sowohl die Vorteile einer Standlupe, wie auch einer Handlupe vereinbart. Weiter ist es Aufgabe der Erfindung, eine sichere und bequeme Handhabung der Standlupe zu gewährleisten und insbesondere den Komfort bei der Verwendung der Lupe auf ebenen Flächen zu erhöhen.

Als Kern der Erfindung wird es angesehen, daß die Handlupe an dem Lupentopf lösbar befestigt ist. Durch die lösbare Befestigung der Handlupe an dem Lupentopf wird es ermöglicht, die Vorteile einer Handlupe (geringes Gewicht, geringes Gesamtvolumen) mit den Vorteilen einer Standlupe (freihändige Beobachtung eines vergrößerten Objektes bzw. Lesegutes) in einer Ausführungsform zu vereinbaren. Damit wird es dem Benutzer erspart, sich die beiden einzelnen Lupen anzuschaffen, da er die jeweiligen Vorteile in der vorliegenden Ausführungsform vorfindet.

Im Falle eines nichttransparenten Lupentopfes oder aber der Verwendung der erfindungsgemäßen Standlupe auf einer nicht unterseitig beleuchteten Oberfläche ist es vorteilhaft, die Standlupe mit einem eigenen Leuchtmittel auszubilden. Dieses Leuchtmittel kann beispielsweise eine Glühbirne oder aber vorzugsweise auch eine LED bzw. eine Hochleistungs-LED umfassen. Damit wird es ermöglicht, sowohl bei der Verwendung der von dem Lupentopf abgekoppelten Handlupe die Beleuchtungsfunktion integriert zu haben, als auch in der Betriebsart als Standlupe (Zusammensetzung von Handlupe und Lupenkörper). Die Handlupe ist bei aufgesetztem Lupentopf gegenüber der Aufstellfläche verschwenkbar gelagert. Diese Lagerung wird innerhalb des Lupentopfes realisiert. Wenn die Schwenkachse etwa mittig durch den Lupentopf verläuft und/oder unmittelbar über der Aufstellfläche angeordnet ist, kann auf einfache und für den Bediener komfortable Weise eine Verschwenkfunktion umgesetzt werden.

Durch die verschwenkbare Ausgestaltung des Lupentopfes wird es ermöglicht, den Lupenkörper entsprechend des Blickwinkels des Benutzers auszurichten und damit den Bedienkomfort der Standlupe zu erhöhen.

In vorteilhafter Weise ist die lösbare Verbindung zwischen der Handlupe und dem Lupentopf über eine Schnapp-Rast-Verbindung realisiert. Alternativ für sich alleine, aber auch in Kombination mit einer Schnapp-Rast-Verbindung kann auch eine Mehrzahl miteinander anziehend gekoppelter Magnete im Randbereich des Lupenkörpers eine sichere und komfortable lösbare Verbindung der Handlupe mit dem Lupentopf bilden. Vorzugsweise sind zwei bis sechs Magnetpaare, die beispielsweise äquidistant und/oder symmetrisch zur Schwenkachse an den beiden Verbindungspartnern angeordnet sind, plaziert. Dadurch kann das Zusammenfügen und Lösen der beiden Verbindungspartner komfortabel und zuverlässig mit einfachen Handgriffen durchgeführt werden. Darüber hinaus ist der Lupentopf mindestens zweiteilig ausgebildet, nämlich aus zwei relativ zueinander beweglichen Lupentopfteilen, welche im wesentlichen lichtdicht ineinander gelagert sind. Konkreter könnte dies mit kugelkalottenförmigen Lupentopfteilen erreicht werden. Mit der Zweiteilung des Lupentopfes wird die Schwenkfunktion auf einfache Weise in den Lupentopf verlagert. Die Lichtdichtheit zwischen den beweglichen Lupentopfteilen ist dann von Vorteil, wenn der seitliche Einfall von Umgebungslicht auf die Aufstellfläche vermieden werden soll, um die Beobachtung der Aufstellfläche nicht durch seitlich einfallendes Licht zu beeinträchtigen.

Ferner ist es vorteilhaft, wenn zumindest zwei relativ zueinander bewegliche Lupentopfteile zumindest teilweise flächig berührend ineinander verschwenkbar sind. Der Vorteil einer flächigen Berührung kann zum einen darin liegen, daß diese die Lichtdichtheit des Lupentopfes fördert und zum anderen kann durch die Berührung zweier Lupentopfteile über gezielte Auslegung der an den Berührpunkten bzw. Flächen wirkenden Reibungskräfte, die Verschwenkung der beiden Teile erst bei Aufbringen einer definierten Kraft erreicht werden. In Weiterbildung dieses Merkmals ist es zweckmäßig zur Verschwenkung der beiden Lupentopfteile Rastelemente an zumindest einem Lupentopfteil anzuordnen. Mit einem derartigen Rastelement können die beiden Lupentopfteile in definierte zueinander verschwenkte Stellungen eingerastet werden. Diese Maßnahme ist beispielsweise dann von Vorteil, wenn die erfindungsgemäße Standlupe durch eine zittrige Hand bedient wird, da die Schwingungen der zittrigen Hand nicht auf die schwenkbare Bewegung der Lupentopfteile übertragen werden.

In einer konstruktiv einfachen Ausführungsform ist die Schwenkachse der beiden Lupentopfteile durch Zapfen und Gegenmittel an den jeweils zueinander verschwenkbaren Lupentopfteilen ausgebildet oder defmiert. Im weiteren wird vorgeschlagen, die Schwenkbarkeit der beiden Lupentopfteile derart zu gestalten, daß der Lupentopf ausgehend von einer Parallellage zwischen Aufstellfläche und Lupenkörper in wenigstens zwei Richtungen verschwenkbar ist. Damit kann ein Einschwenken der Standlupe hin zu dem Benutzer unabhängig davon, ob dieser die Lupe in seiner linken oder rechten Hand am Griff hält, erreicht werden.

Darüber hinaus hat es sich als günstig erwiesen, wenn an dem Kopplungsbereichen zwischen Handlupe und Lupentopf verschiedene Merkmale berücksichtigt werden, so z.B. daß an der Oberkante des Lupentopfes eine Ausnehmung vorgesehen ist, die mit einem Ansetzbereich der Handlupe korrespondiert. Eine weitere Maßnahme wäre beispielsweise an der Oberkante des Lupentopfes einen Ringbund auszubilden, der mit einem Gegenbereich der Handlupe korrespondiert. Mit diesen beiden Maßnahmen wird ein leichteres Zusammensetzen der Handlupe mit dem Lupentopf ermöglicht, da die Ausnehmung bzw. Ringbund mit dem jeweiligen korrespondierenden Bereichen selbstzentrierend wirkt.

Im übrigen sei noch darauf hingewiesen, daß das an der Handlupe angeordnete Beleuchtungsmittel im zusammengesetzten Zustand von Handlupe und Lupentopf durch die Ausnehmung des Lupentopfes die Aufstandsfläche beleuchtet, und so eine einfache, kostengünstige wie auch technische sinnvolle Anordnung der LED gewährleistet, da diese sowohl im zusammengesetzten Standlupenbetrieb, als auch im Handlupenbetrieb verwendbar und wobei der Griff des Lupentopfes derart geformt ist, daß dieser die Aufstandsfläche mit seinem freien Griffendbereich berührt. Durch das Aufliegen des Griffendbereiches des Griffes kann eine komfortablere Bedienung der Standlupe erreicht werden, da eventuelle Schwingungen (ausgehend von zittrigen Händen) sich weniger stark auf die "feststehende" Standlupe übertragen. Im Falle der Verschwenkfunktion der Standlupe ist es zweckmäßig, das Griffende des am Lupenkörper angeordneten Griffes abrollfähig in der Ebene der Aufstellfläche anzuordnen bzw. abzustützen. Dabei bedeutet rollfähig, daß der Griffendbereich derart geformt ist, daß dieser entsprechend der Verschwenkbarkeit über die gesamte Schwenkbewegung zumindest einen Berührungspunkt und/oder Berührungslinie mit der Aufstellfläche bildet. Eine weitere Maßnahme um einen sicheren Stand der Standlupe zu erreichen, ist es, in mindestens einer Schwenkstellung neben dem untersten Lupentopfteil zumindest den Randbereich eines weiteren, verschwenkten Lupentopfteils auf der Aufstellfläche abzustützen. Eine derartige Schwenkstellung kann beispielsweise eine Endlagenposition darstellen.

Wenn die Standlupe ein mit Akkus oder mit Netzspannung betreibbares Leuchtmittel aufweist, ist es vorteilhaft, eine Ladebuchse zur Einführung eines Ladesteckers bzw. Netzkabelsteckers vorzusehen. Diese Ladesteckerbuchse kann beispielsweise am freien Griffende angeordnet sein und dabei ist darauf zu achten, daß ein in diese eingesetzte Ladestecker die Abrollbewegung des Griffendes auf der Aufstandsfläche während des Verschwenkens der Standlupe nicht behindert. Dies wird beispielsweise dadurch erreicht, daß die Ladebuchse mit ihrer Mittellängsachse vom Lupenkörper entgegengerichtet und nach oben (schräg nach oben) weist.

In der bevorzugten Ausführungsform weist der Topf eine runde Grundform auf, dabei erstreckt sich der Griff radial nach außen. Zudem kann es vorgesehen sein, daß die Mittellängsachse des Griffes parallel zu der Schwenkachse angeordnet ist und diese von. der Draufsicht aus betrachtet, in einer Flucht liegen.

In einer zweiten alternativen Ausführungsform weist der Lupentopf eine rechteckige Grundform auf, wobei die Mittellängsachse des Griffes mit der Schwenkachse einen spitzen Winkel einschließt oder parallel dazu angeordnet ist.

In dem Fall, daß die Mittellängsachse des Griffes mit der Schwenkachse einen spitzen Winkel einschließt, ist es vorteilhaft, wenn das Griffende bei abgekippter Handlupe auf der Aufstandsfläche aufliegt und in einer zweiten Stellung (Parallellage von Lupenkörper und Aufstellfläche) schwebt (Beabstandung von Griffende zur Aufstellfläche).

Die Erfindung ist anhand von Ausführungsbeispielen in den Zeichnungsfiguren näher erläutert. Diese zeigen
- Fig. 1: eine perspektivische Darstellung einer Standlupe im entkoppelten Zustand von Handlupe und Lupentopf;

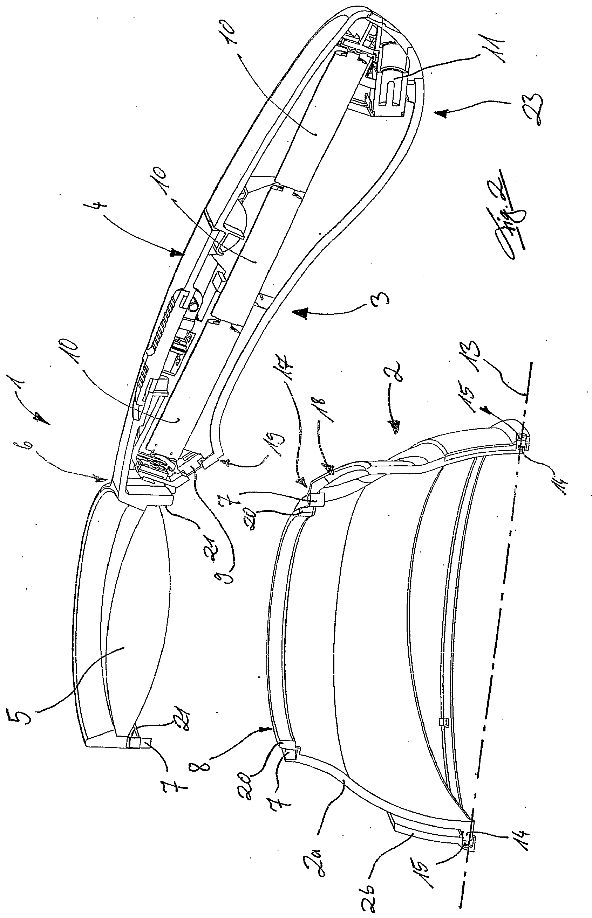

- Fig. 2: eine perspektivische Schnittdarstellung einer Standlupe gemäß Fig. 1;

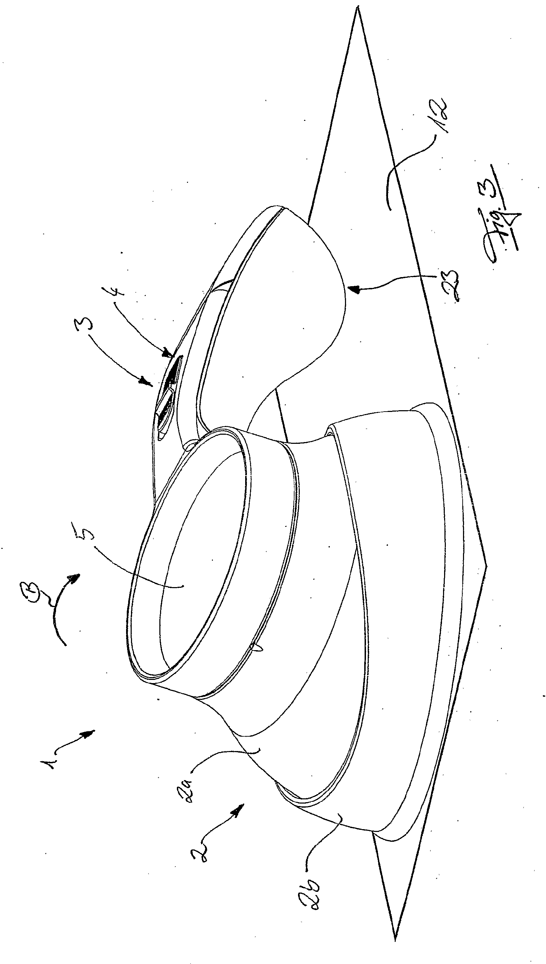

- Fig. 3: eine perspektivische Darstellung einer Standlupe in einer ersten Schwenkendlage;

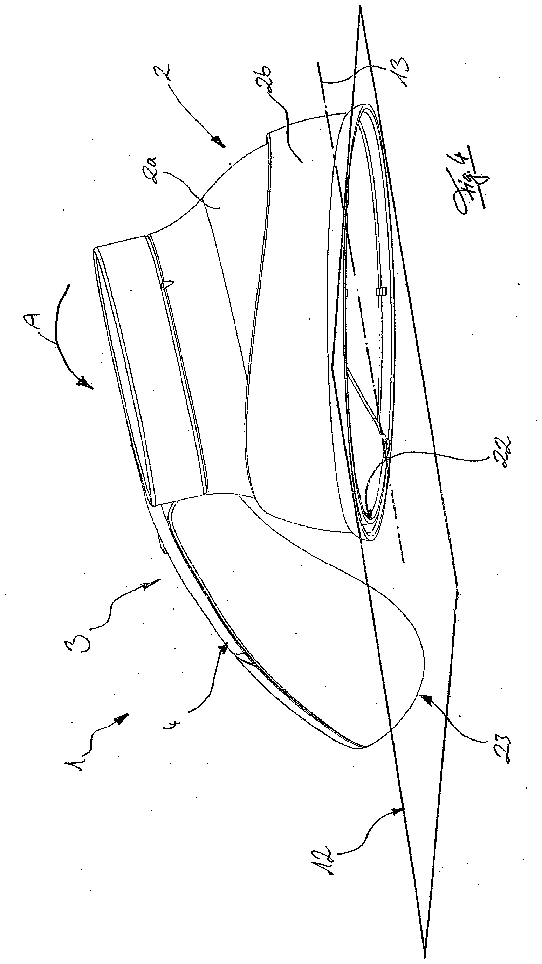

- Fig. 4: eine perspektivische Darstellung einer Standlupe gemäß Fig. 3 in einer zweiten Schwenkendlage;
- Fig. 5: eine perspektivische Darstellung einer alternativen Ausführungsform der Standlupe in einer ersten Schwenkendlage;
- Fig. 6: eine perspektivische Darstellung einer Standlupe gemäß Fig. 5 in einer zweiten Schwenkendlage.

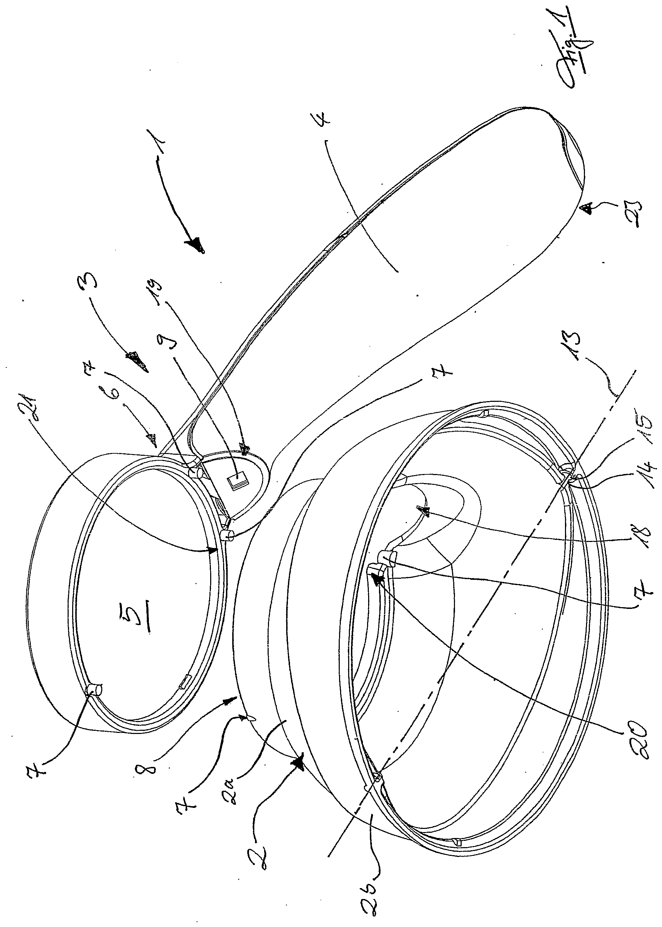

Figur 1 zeigt eine Standlupe 1, die aus einem Lupentopf 2 und einem Lupenelement 3 zusammensetzbar ist. Das Lupenelement 3 weist einen Griff 4 sowie einen Lupenkörper 5, der an einem Griffende 6 angeordnet ist, auf. Das Lupenelement 3 ist lösbar mit dem Lupentopf 2 verbunden und bildet damit eine Handlupe. Die Begriffe "Handlupe 3" und "Lupenelement 3" werden als Synonym verwendet. Dabei kann die lösbare Verbindung zwischen Lupentopf 2 und Handlupe 3 durch eine Mehrzahl miteinander anziehend gekoppelter Magnete 7 im Randbereich 8 des Lupenkörpers 5 ausgebildet sein. In der bevorzugten Ausführungsform wurden drei Magnetpaare 7 verwendet. Die Magnete 7 können auch in dem Randbereich der Fassung des Lupenkörpers den Randbereich plan abschließend eingelassen sein. Alternativ dazu kann die lösbare Verbindung auch in Form einer Schnapp-Rast-Verbindung oder aber einer Kombination einer Schnapp-Rast-Verbindung und einer Mehrzahl miteinander anziehend gekoppelter Magnete 7 realisiert sein.

In der bevorzugten Ausführungsform ist die Handlupe 3 mit einem Leuchtmittel 9 versehen. Wie in Zeichnungsfigur 2 dargestellt, wird das Leuchtmittel 9 mit Hilfe von Batterien oder Akkus 10 mit Spannung versorgt. Im Falle der Verwendung von Akkus 10 können diese über eine Ladebuchse 11 an ein Netzgerät angeschlossen und geladen werden. Darüber hinaus ist auch eine Stromversorgung des Leuchtmittels 9 direkt über einen Netzanschluß erfindungsgemäß.

In den Zeichnungsfiguren 3 und 4 ist mit den Bezugszeichen 12 die Aufstellfläche 12 dargestellt. Die erfindungsgemäße Standlupe 1 ist im zusammengesetzten Zustand von der Handlupe 3 und Lupentopf 2 gegenüber der Aufstellfläche 12 verschwenkbar. Die Zeichnungsfiguren 3 und 4 zeigen die beiden Endlagen der verschwenkbaren Standlupe 1. Dabei verläuft die Schwenkachse 13 etwa mittig durch den Lupentopf 2 und unmittelbar über der Aufstellfläche 12.

Der Lupentopf 2 ist zweiteilig ausgebildet, wobei die beiden beweglichen Lupentopfteile 2a, 2b relativ zueinander beweglich gelagert sind und im wesentlichen lichtdicht ineinander greifen.

Im Falle einer ersten Ausführungsform, die in den Zeichnungsfiguren 1 - 4 dargestellt ist, ist die Grundflächenform des Lupentopfes 2 rund, dabei eignet sich für die Form der Lupentopfteile 2a, 2b eine kugelkalottenförmige Ausbildung.

Die Schwenkachse 13 wird durch eine Zapfen 14 und Gegenmittel 15 Verbindung in den jeweils zueinander verschwenkbaren Lupentopfteilen 2a, 2b gebildet bzw. definiert, vgl. insbesondere Zeichnungsfigur 2.

Die Verschwenkung der beiden Lupentopfteile 2a, 2b ist in der bevorzugten Ausführungsform durch Rastelemente (nicht dargestellt), die zumindest an einem Lupentopfteil 2a, 2b angeordnet sind, mit einer Rasterung versehen. In der ersten Ausführungsform ist der Lupentopf 2 ausgehend von einer Parallellage zwischen Aufstellfläche 12 und Lupenkörper 5 in wenigstens zwei Richtungen A, B verschwenkbar. Wie aus den Zeichnungsfiguren 1 und 2 entnehmbar, ist an der Oberkante 17 des Lupentopfes 2 eine Ausnehmung 18 vorgesehen, die mit einem Ansetzbereich 19 der Handlupe 3 korrespondiert. Ein derartiger Ansetzbereich 19 kann beispielsweise eine zurückversetzte Kante aufweisen, die auf die Ausnehmung 18 des Lupentopfes 2 angepaßt ist. Ferner weist die Oberkante 17 einen Ringbund 20 auf, der mit einem Gegenbereich 21 der Handlupe 3 korrespondiert.

Das an der Handlupe 3 angeordnete Beleuchtungsmittel 9, beleuchtet im zusammengesetzten Zustand von Handlupe 3 und Lupentopf 2 durch die Ausnehmung 18 die von dem Lupentopf 2 überdeckte Aufstellfläche 12.

Der Handgriff 4 der Standlupe 1 ist derart geformt, daß dieser die Aufstellfläche 12 mit seinem freien Griffendbereich 23 berührt, wobei der freie Griffendbereich 23 über die gesamte Schwenkbewegung A, B mit der Aufstellfläche 12 in Berührung bleibt. Dabei ist es zweckmäßig, das freie Griffende 23 des am Lupenkörpers 5 angeordneten Griffes 4 abrollfähig in der Ebene der Aufstellfläche 12 anzuordnen bzw. abzustützen.

Wie aus Zeichnungsfigur 4 erkennbar ist, ist in dieser Schwenkstellung neben dem untersten Lupentopfteil 2b auch der Randbereich 22 des verschwenkten Lupentopfteils 2a auf der Aufstellfläche 12 abgestützt.

Die am Ende des Handgriffes 4 angeordnete Ladebuchse 11 ist derart angeordnet, daß ein in diese eingesteckter Ladestecker (nicht dargestellt) die Abrollbewegung des freien Griffendes 23 auf der Aufstellfläche 12 nicht beeinträchtigt.

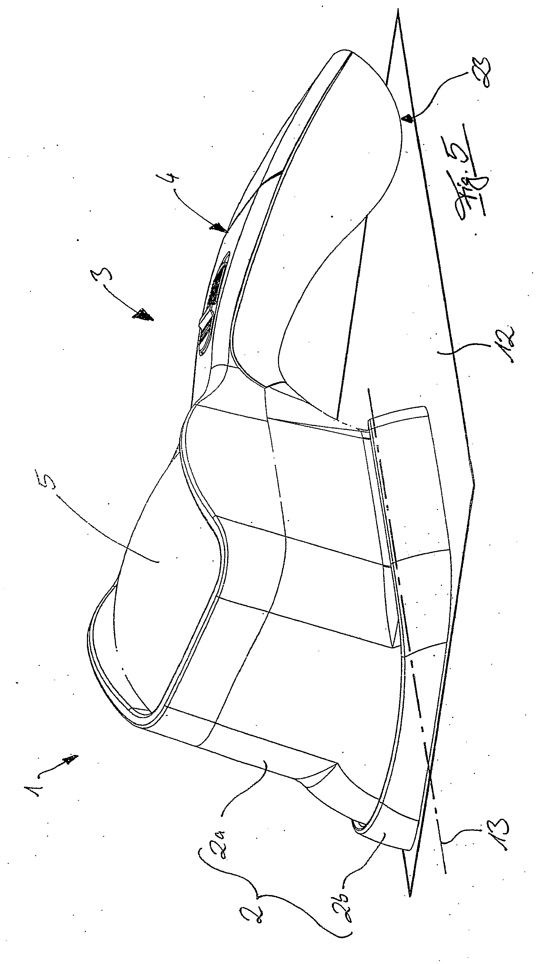

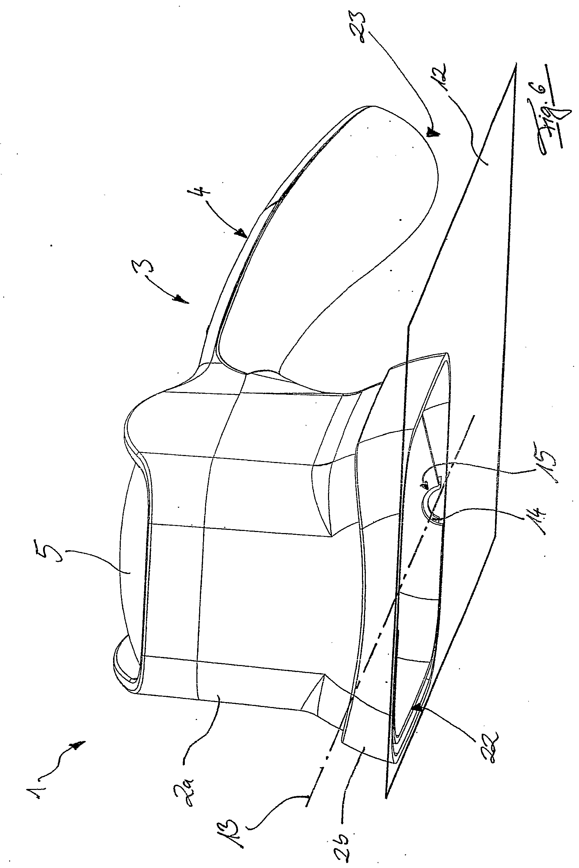

In der ersten Ausführungsform der Standlupe 1 mit einer runden Grundflächenform kann der Griff 4 sich radial nach außen erstrecken, dabei ist es zweckmäßig, die Mittellängsachse (nicht dargestellt) des Griffes 4 parallel zu der Schwenkachse 13 verlaufen zu lassen. Die Zeichnungsfiguren 5 und 6 betreffen eine zweite alternative Ausführungsform, in der der Lupentopf 2 eine rechteckige Grundflächenform aufweist. Bei dieser Variante schließt die Mittellängsachse des Griffes 4 mit der Schwenkachse 13 einen spitzen Winkel ein. Weiter ist zu erkennen, daß das freie Griffende 23 bei gekippter Handlupe (Figur 5) auf der Aufstellfläche 12 aufliegt und in einer zweiten Stellung, in der der Lupenkörper 5 und die Aufstellfläche 12 parallel zueinander anliegen (Figur 6), das Griffende 23 über der Aufstellfläche 12 beabstandet angeordnet ist. Bei der im wesentlichen rechteckigen Grundflächenform des Lupentopfes 2 ist es ferner möglich, die Schwenkachse 13 im wesentlichen entlang der Diagonalen (nicht dargestellt) der rechteckigen Grundflächenform verlaufen zu lassen und die Mittellängsachse des Griffes 4 in Draufsicht in einer Flucht mit der Schwenkachse 13 verlaufen zu lassen. Dabei ist es möglich, daß das Griffende 23 in jeder Schwenkstellung des Lupentopfes 2 auf der Aufstellfläche 12 aufliegt.

Das Leuchtmittel 9 kann über den Schalter 16 betätigt werden.

### BEZUGSZEICHENLISTE

- 1: Standlupe
- 2: Lupentopf
- 2a: Lupentopfteil
- 2b: Lupentopfteil
- 3: Lupenelement/Handlupe
- 4: Griff
- 5: Lupenkörper
- 6: Griffende
- 7: Magnet
- 8: Randbereich
- 9: Leuchtmittel
- 10: Batterie/Akku
- 11: Ladebuchse
- 12: Aufstellfläche
- 13: Schwenkachse
- 14: Zapfen
- 15: Gegenmittel
- 16: Schalter
- 17: Oberkante
- 18: Ausnehmung
- 19: Ansetzbereich
- 20: Ringbund
- 21: Gegenbereich
- 22: Randbereich
- 23: freies Griffende

## Patentansprüche

1. Standlupe (1) bestehend aus einem auf ein Lesegut oder auf eine sonstige zu betrachtende Oberfläche, nämlich Aufstellfläche (12), aufsetzbarem Lupentopf (2) und einem Lupenelement (3) mit einem Griff (4) und einem Lupenkörper (5), der an einem Griffende (6) angeordnet ist, wobei das Lupenelement (3) an dem Lupentopf (2) lösbar befestigt ist und das Lupenelement (3) bei aufgesetztem Lupentopf (2) gegenüber der Aufstellfläche (12) verschwenkbar ist,
**dadurch gekennzeichnet, dass**
der Lupentopf (2) mindestens zweiteilig ausgebildet ist, zumindest zwei relativ zueinander schwenkbewegliche Lupentopfteile (2a, 2b) lichtdicht ineinander gelagert sind und das Lupenelement (3) als gesondert verwendbare Handlupe ausgebildet ist und der Griff (4) derart geformt ist, dass bei aufgesetztem Lupentopf (2) der Lupentopf (2) sowie der Griff (4) des Lupenelements (2) die Aufstellfläche (12) mit seinem freien Griffendbereich (23) berührt.

2. Standlupe nach Anspruch 1, wobei das Lupenelement (3) ein Leuchtmittel (9) aufweist.

3. Standlupe nach Anspruch 1 oder 2, wobei die Schwenkachse (13) mittig durch den Lupentopf (2) verläuft und unmittelbar über der Aufstellfläche (12) angeordnet ist.

4. Standlupe nach einem der vorhergehenden Ansprüche, wobei die lösbare Verbindung zwischen Lupentopf (2) und Lupenelement (3) durch eine Schnapp-Rastverbindung ausgebildet ist.

5. Standlupe nach einem der vorhergehenden Ansprüche, wobei die lösbare Verbindung zwischen Lupentopf (2) und Lupenelement (3) durch eine Mehrzahl miteinander anziehend koppelnder Magnete (7) im Randbereich (8) des Lupenkörpers (5) gebildet ist.

6. Standlupe nach einem der vorhergehenden Ansprüche, wobei mindestens zwei zueinander verschwenkbare Lupentopfteile (2a, 2b) kugelkalottenförmig ausgebildet sind.

7. Standlupe nach Anspruch 6, wobei zumindest zwei relativ zueinander bewegliche Lupentopfteile (2a, 2b) zumindest teilweise flächig berührend ineinander verschwenkbar sind.

8. Standlupe nach zumindest einem der vorhergehenden Ansprüche, wobei die Schwenkachse (13) durch Zapfen (14) und Gegenmittel (15) in den jeweils zueinander verschwenkbaren Lupentopfteilen (2a, 2b) gebildet oder definiert ist.

9. Standlupe nach zumindest einem der vorhergehenden Ansprüche, wobei zur Verschwenkung Rastelemente an zumindest einem Lupentopfteil (2a, 2b) angeordnet sind.

10. Standlupe nach zumindest einem der vorhergehenden Ansprüche, wobei der Lupentopf (2) ausgehend von einer Parallellage zwischen Aufstellfläche (12) und Lupenkörper (5) in wenigstens zwei Richtungen (A, B) verschwenkbar ist.

11. Standlupe nach einem der vorhergehenden Ansprüche, wobei an der Oberkante (17) des Lupentopfes (2) eine Ausnehmung (18) vorgesehen ist, die mit einem Ansetzbereich (19) des Lupenelementes (3) korrespondiert.

12. Standlupe nach einem der vorhergehenden Ansprüche, wobei das an dem Lupenelement (3) angeordnete Beleuchtungsmittel (9) im zusammengesetzten Zustand von Lupenelement (3) und Lupentopf (2) durch die Ausnehmung (18) des Lupentopfes (2) die Aufstellfläche (12) beleuchtet.

13. Standlupe nach einem der vorhergehenden Ansprüche, wobei das freie Griffende (23) des am Lupenkörper (5) angeordneten Griffes (4) abrollfähig in der Ebene der Aufstellfläche (12) angeordnet und/oder abgestützt ist.

14. Standlupe nach zumindest einem der vorhergehenden Ansprüche, wobei in mindestens einer Schwenkstellung neben dem untersten Lupentopfteil (2b) zumindest ein Randbereich (22) eines weiteren, verschwenkten Lupentopfteils (2a) auf der Aufstellfläche (12) abgestützt ist.

15. Standlupe nach einem der vorhergehenden Ansprüche 2 - 14, wobei am freien Ende (23) des Handgriffes (4) eine Ladebuchse (11) derart angeordnet ist, dass ein in diese eingesetzter Ladestecker die Abrollbewegung des freien Griffendes (23) auf der Aufstellfläche (12) nicht beeinträchtigt.

## Claims

1. Stand magnifier (1) comprising a magnifier base (2) to be placed on reading material or another surface to be inspected, specifically a supporting surface (12), and a magnifier element (3) having a handle (4) and a magnifier body (5), which is arranged on a handle end (6), the magnifier element (3) being detachably fixed to the magnifier base (2) and, when the magnifier base (2) is put in place, the magnifier element (3) can be pivoted with respect to the supporting surface (12),
**characterized in that**
the magnifier base (2) is formed in at least two parts, at least two magnifier base parts (2a, 2b) that can be pivoted relative to each other are supported in each other in a light-tight manner, and the magnifier element (3) is designed as a separately usable hand-held magnifier, and the handle (4) is shaped in such a way that when the magnifier base (2) is put in place, the magnifier base (2) and the handle (4) of the magnifier element (2) make contact with the supporting surface (12) with its free handle end region (23).

2. Stand magnifier according to Claim 1, wherein the magnifier element (3) has an illuminating means (9).

3. Stand magnifier according to Claim 1 or 2, wherein the pivot axis (13) extends centrally through the magnifier base (2) and is arranged directly above the supporting surface (12).

4. Stand magnifier according to one of the preceding claims, wherein the detachable connection between magnifier base (2) and magnifier element (3) is formed by a snap-in latching connection.

5. Stand magnifier according to one of the preceding claims, wherein the detachable connection between magnifier base (2) and magnifier element (3) is formed by a multiplicity of magnets (7) coupling to one another by attraction in the edge region (8) of the magnifier body (5).

6. Stand magnifier according to one of the preceding claims, wherein at least two magnifier base parts (2a, 2b) that can be pivoted in relation to each other are designed in the form of a spherical ball joint.

7. Stand magnifier according to Claim 6, wherein at least two magnifier base parts (2a, 2b) that can be moved relative to each other can be pivoted in each other, making at least partial flat contact.

8. Stand magnifier according to at least one of the preceding claims, wherein the pivot axis (13) is formed or defined by pins (14) and mating means (15) in the magnifier base parts (2a, 2b) that can each be pivoted relative to each other.

9. Stand magnifier according to at least one of the preceding claims, wherein, for the pivoting, latching elements are arranged on at least one magnifier base part (2a, 2b).

10. Stand magnifier according to at least one of the preceding claims, wherein, starting from a parallel position between supporting surface (12) and magnifier body (5), the magnifier base (2) can be pivoted in at least two directions (A, B).

11. Stand magnifier according to one of the preceding claims, wherein a cut-out (18) is provided on the upper edge (17) of the magnifier base (2), corresponding to an attachment area (19) of the magnifier element (3).

12. Stand magnifier according to one of the preceding claims, wherein, when the magnifier element (3) and magnifier base (2) are assembled, the illuminating means (9) arranged on the magnifier element (3) illuminates the supporting surface (12) through the cut-out (18) of the magnifier base (2).

13. Stand magnifier according to one of the preceding claims, wherein the free handle end (23) of the handle (4) arranged on the magnifier body (5) is arranged and/or supported such that is capable of rolling in the plane of the supporting surface (12).

14. Stand magnifier according to at least one of the preceding claims, wherein, in at least one pivoted position, besides the lowest magnifier base part (2b), at least one edge region (22) of a further, pivoted magnifier base part (2a) is supported on the supporting surface (12).

15. Stand magnifier according to one of the preceding Claims 2 - 14, wherein, at the free end (23) of the handle (4), a charging socket (11) is arranged in such a way that a charging plug inserted therein does not impair the rolling movement of the free handle end (23) on the supporting surface (12).

## Revendications

1. Loupe (1) sur socle constituée d'un bol de loupe (2) apte à être placé sur une surface quelconque à observer, appelée surface de pose (12), et d'un élément de loupe (3) doté d'une poignée (4) et d'un corps de loupe (5) disposé à une extrémité (6) de la poignée, l'élément de loupe (3) étant fixé de manière libérable sur le bol de loupe (2) et l'élément de loupe (3) pouvant pivoter par rapport à la surface de pose (12) lorsque le bol de loupe (2) a été placé,
**caractérisée en ce que**
le bol de loupe (2) est configuré en au moins deux pièces,
**en ce qu'**au moins deux parties (2a, 2b) de bol de loupe aptes à se déplacer l'une par rapport à l'autre par pivotement sont montées l'une dans l'autre de manière opaque à la lumière,
**en ce que** l'élément de loupe (3) est configuré comme loupe portable utilisable séparément et est façonné sur la poignée (4) de telle sorte que lorsque le bol de loupe (2) a été placé, le bol de loupe (2) et la poignée (4) de l'élément (2) de loupe sont en contact avec la surface de pose (12) par la partie libre (23) de la poignée.

2. Loupe à socle selon la revendication 1, dans laquelle l'élément de loupe (3) présente un moyen d'éclairage (9).

3. Loupe à socle selon les revendications 1 ou 2, dans laquelle l'axe de pivotement (13) passe par le centre du bol de loupe (2) et est disposé immédiatement au-dessus de la surface de pose (12).

4. Loupe à socle selon l'une des revendications précédentes, dans laquelle la liaison libérable entre le bol de loupe (2) et l'élément de loupe (3) est configurée sous la forme d'une liaison à encliquetage.

5. Loupe à socle selon l'une des revendications précédentes, dans laquelle la liaison libérable entre le bol de loupe (2) et l'élément de loupe (3) est formée par plusieurs aimants (7) qui s'accouplent mutuellement par traction et qui sont disposés dans la bordure (8) du corps de loupe (5).

6. Loupe à socle selon l'une des revendications précédentes, dans laquelle au moins deux parties (2a, 2b) de bol de loupe aptes à pivoter l'une par rapport à l'autre sont configurées en forme de calotte sphérique.

7. Loupe à socle selon la revendication 6, dans laquelle au moins deux parties (2a, 2b) de loupe aptes à se déplacer l'une par rapport à l'autre peuvent pivoter au moins en partie l'une dans l'autre en se touchant sur toute leur surface.

8. Loupe à socle selon l'une des revendications précédentes, dans laquelle l'axe de pivotement (13) est formé ou défini par des tourillons (14) et des moyens complémentaires (15) prévus dans chacune des parties (2a, 2b) de bol de loupe aptes à pivoter l'une par rapport à l'autre.

9. Loupe à socle selon l'une des revendications précédentes, dans laquelle les éléments d'encliquetage sont disposés pour le pivotement sur au moins une partie (2a, 2b) de bol de loupe.

10. Loupe à socle selon l'une des revendications précédentes, dans laquelle le bol de loupe (2) peut pivoter dans au moins deux directions (A, B) partant d'une position de parallélisme entre la surface de pose (12) et le corps (5) de loupe.

11. Loupe à socle selon l'une des revendications précédentes, dans laquelle une découpe (18) qui correspond à une partie de placement (19) de l'élément de loupe (3) est prévue sur le champ supérieur (17) du bol de loupe (2).

12. Loupe à socle selon l'une des revendications précédentes, dans laquelle le moyen d'éclairage (9) disposé sur l'élément de loupe (3) éclaire la surface de pose (12) à travers la découpe (18) ménagée dans le bol de loupe (2) lorsque l'élément de loupe (3) et le bol de loupe (2) sont assemblés.

13. Loupe à socle selon l'une des revendications précédentes, dans laquelle l'extrémité libre (23) de la poignée (4) disposée sur le corps de loupe (5) est disposée et/ou soutenue dans le plan de la surface de pose (12) de manière à pouvoir s'y dérouler.

14. Loupe à socle selon l'une des revendications précédentes, dans laquelle au moins une bordure (22) d'une autre partie (2a) de bol de loupe apte à pivoter est soutenue sur la surface de pose (12) dans au moins une position de pivotement en plus de la partie inférieure (2b) de bol de loupe.

15. Loupe à socle selon l'une des revendications 2 à 14 qui précèdent, dans laquelle une douille de chargement (11) est disposée à l'extrémité libre (23) de la poignée (4) de telle sorte qu'une fiche de chargement qui y est insérée ne contrarie pas le déplacement de roulement de l'extrémité libre (23) de la poignée sur la surface de pose (12).
